# EUROPÄISCHE PATENTANMELDUNG

(11) **EP 2 747 087 A1**
(43) Veröffentlichungstag der Anmeldung: **25.06.2014**
(21) Anmeldenummer: 12008603.8
(22) Anmeldetag: 22.12.2012
(51) Int. Cl.: G21C 9/008, F16K 17/38, G21C 9/016, G21C 9/02, G21C 9/033, G21C 15/18

(54) **Rohrabsperreinrichtung und Vorrichtung zur Notversorgung der in einem Reaktorbehälter eines Kernkraftwerks angeordneten Brennstäbe mit Kühlflüssigkeit mit einer solchen Rohrabsperreinrichtung**

(71) Anmelder: AREVA GmbH, 91052 Erlangen (DE)
(72) Erfinder: Sigurd, Adam, 55450 Langenlonsheim (DE); Schubert, Matthias, 34369 Hofgeismar (DE); Wodara, Gunter, 34454 Bad Arolsen (DE)
(74) Vertreter: Tergau & Walkenhorst

(57) **Zusammenfassung**

Rohrabsperreinrichtung (10) umfassend einen in einer Rohrleitung (3) angeordneten Rohrabschnitt (10a) mit einem Absperrglied (19), wobei das Absperrglied (19) in Schließstellung durch eine im Bereich des Rohrabschnitts (10a) angeordnete Einrichtung (22) zerstörbar ist, wobei die Einrichtung zur Zerstörung des Absperrgliedes (19) von außen betätigbar ist.

## Beschreibung

Die Erfindung betrifft einerseits eine Rohrabsperreinrichtung umfassend einen in einer Rohrleitung angeordneten Rohrabschnitt mit einem Absperrglied, sowie andererseits eine Vorrichtung zur Notversorgung der in einem Reaktorbehälter eines Kernkraftwerks angeordneten Brennstäbe mit Kühlflüssigkeit bei einsetzender Kernschmelze, umfassend einen Behälter zur Aufnahme der Kühlflüssigkeit, der mit dem Reaktorbehälter durch mindestens eine Rohrleitung verbunden ist.

Rohrabsperreinrichtungen zur Notversorgung der in einem Reaktorbehälter eines Kernkraftwerkes angeordneten Brennstäbe mit Kühlflüssigkeit, wie zuvor beschrieben, sind bekannt. Hierbei ist in der Rohrleitung eine Absperreinrichtung vorgesehen, das wie folgt ausgebildet ist. Bestandteil der Rohrabsperreinrichtung ist eine in der Rohrleitung angeordnete schwenkbare Rückschlagklappe. Die Schwenkachse der Rückschlagklappe weist einen Hebelarm auf, wobei an dem Hebelarm endseitig ein Gewicht angeordnet ist. Das Gewicht wird durch ein Seil oder durch eine Kette in einer Stellung gehalten, in der die Rückschlagklappe die Rohrleitung absperrt. Bei einsetzender Kernschmelze ist nun vorgesehen, dass diese Kette oder das Seil schmilzt, das Gewicht aufgrund der Schwerkraft sich nach unten bewegt und hierbei die Rückschlagklappe der Rohrabsperreinrichtung entgegen der anstehenden Kühlflüssigkeit geöffnet wird. Diese Ausbildung einer solchen Rohrabsperreinrichtung hat verschiedene Nachteile. Als Kühlflüssigkeit für den Reaktorbehälter dient boriertes Wasser. Die schwenkbare Rückschlagklappe sitzt unter dem Druck der anstehenden Kühlflüssigkeit und des Gewichts im geschlossenen Zustand der Klappe auf einer in dem Rohrabschnitt der Rohrabsperreinrichtung angeordneten metallischen Flachdichtung auf. Boriertes Wasser als Kühlflüssigkeit ist äußerst aggressiv gegen Metalle, weshalb das borierte Wasser die metallische Dichtung im Laufe der Zeit angreift. Dies kann zu Leckagen führen, weshalb im Bereich der Absperreinrichtung ein Sammelbehälter vorgesehen ist, um die evtl. anfallende Leckageflüssigkeit aufzunehmen. Um somit dauerhaft die Dichtigkeit gewährleisten zu können, sind wiederkehrende Prüfungen in festgelegten kurzen zeitlichen Abständen erforderlich. Derartige Prüfungen der Funktion der Rückschlagklappe sind aufwendig; in Strömungsrichtung vor der Rückschlagklappe befindet sich eine weitere Absperrklappe mit einem Elektroantrieb. Zur Prüfung muss diese geschlossen werden, um die zwischen Absperrklappe und Rückschlagklappe befindliche Kühlflüssigkeit kontrolliert abzulassen und zu entsorgen. Im Anschluss hieran wird die Funktion der Rückschlagklappe getestet, wobei hierzu das Seil oder die Kette, die die Rückschlagklappe entgegen der Kraft des Gewichts in Geschlossenstellung hält, gelöst wird. Nachteilig an dieser Absperreinrichtung ist nicht nur der hohe Wartungsaufwand, sondern auch die asymmetrische Anordnung der Rückschlagklappe an der Schwerachse, was problematisch bei dynamischen Lastfällen ist. Darüber hinaus sind hohe Öffnungskräfte erforderlich, da die Klappe gegen den Staudruck der Kühlflüssigkeit geöffnet werden muss. Nachteilig ist weiterhin, dass diese Rohrabsperreinrichtung aus vielen Einzelteilen besteht, die eine solche Absperreinrichtung sehr teuer machen.

Darüber hinaus ist eine Rohrabsperreinrichtung bekannt, bei der durch einen Elektroantrieb eine Klappenscheibe in einem Rohrabschnitt drehbar gelagert ist. Zur Abdichtung sind hierbei sogenannte Weichdichtungen vorgesehen, die den Nachteil haben, dass sie nicht alterungsbeständig sind. Das heißt, auch hier sind kurze Wartungsintervalle vorgesehen. Trotz der dichten Wartungsintervalle ist auch hier ein Leckagebehälter vorgesehen.

Die der Erfindung zugrunde liegende Aufgabe besteht demzufolge darin eine Rohrabsperreinrichtung bereitzustellen, die dauerhaft dicht ist, im Wesentlichen wartungsfrei und unproblematisch bei der Beherrschung von dynamischen Lastfällen im Störfall, d. h., dass insbesondere keine bewegten Teile gegen den anstehenden Druck der Kühlflüssigkeit bewegt werden müssen.

Zur Lösung der Aufgabe wird erfindungsgemäß vorgeschlagen, dass das Absperrglied in Schließstellung durch eine im Bereich des Rohrabschnittes angeordnete Einrichtung zerstörbar ist, wobei die Einrichtung zur Zerstörung des Absperrgliedes von außen betätigbar ist. Das Absperrglied dichtet den Rohrabschnitt statisch ab. Das heißt, die Rohrabsperreinrichtung weist keine beweglichen Teile auf, demzufolge können auch keine Dichtungen verschleißen; die Rohrabsperreinrichtung ist prozesssicher, da die Öffnung der Rohrleitung nicht gegen den anstehenden Druck der Kühlflüssigkeit erfolgen muss. Ausschließlich durch die Zerstörung des Absperrgliedes selbst wird der Kühlmittelfluss ermöglicht. Das Absperrglied selbst ist darüber hinaus wartungsfrei; lediglich die Einrichtung zur Zerstörung des Absperrgliedes muss gewartet werden. Die Wartung dieser Einrichtung ist aber unproblematisch, da hierfür nicht in den Kühlmittelkreislauf eingegriffen werden muss.

Vorteilhafte Merkmale und Ausgestaltungen der Erfindung ergeben sich aus den Unteransprüchen und den nebengeordneten Ansprüchen.

So ist insbesondere vorgesehen, das Absperrglied nach Art einer Scheibe ausgebildet ist, die in dem Rohrabschnitt der Rohrabsperreinrichtung umlaufend eingelassen ist. Das heißt, dass der Rohrabschnitt eine umlaufende Nut aufweist, wobei sich in dieser umlaufenden Nut die Scheibe als Absperrglied befindet. Zur Bildung der Nut in dem Rohrabschnitt ist vorgesehen, dass der Rohrabschnitt zwei Flansche mit jeweils einem ringförmigen Ansatz aufweist, wobei im Übergangsbereich zwischen den beiden ringförmigen Ansätzen die besagte Nut gebildet wird, die der Aufnahme der Scheibe dient. Die Verbindung der beiden Flansche kann durch umfangsverteilt angeordnete parallel zur Längsachse des Rohrabschnitts verlaufende Schrauben erfolgen. Die Scheibe kann hierbei durch eine umlaufende, stirnseitig angeordnete Dichtung gegenüber dem Rohrabschnitt in der Nut abgedichtet sein, wobei zusätzlich in Achsrichtung des Rohrabschnittes zumindest auf einer Seite eine weitere umlaufende Dichtung in der Nut angeordnet sein kann. Als Dichtungen können hierbei statische Dichtungen zum Einsatz kommen, da die beiden Teilkomponenten, die gegeneinander abgedichtet werden sollen, nicht beweglich sind. Insofern können auch Dichtungen auf Graphitbasis eingesetzt werden, die gegen boriertes Wasser resistent sind.

Das Absperrglied ist vorzugsweise aus einem spröden Material hergestellt, insbesondere einem Glas, einem glasartigen oder keramischen Werkstoff, wobei zu den keramischen Werkstoffen in diesem Zusammenhang auch Porzellan gezählt wird. Derartige Materialien können relativ leicht zerstört werden, d. h. sie zerspringen bei einer schlagartigen Belastung in viele kleine Einzelteile. In diesem Zusammenhang sind Spezialglasscheiben für industrielle Anwendungen bekannt, die resistent gegen die anstehende Kühlflüssigkeit sind, und darüber hinaus die zuvor erwähnte Eigenschaft hinsichtlich der Zersplitterbarkeit aufweisen.

Die Einrichtung zur Zerstörung des Absperrgliedes ist vorzugsweise auf dem Umfang des Rohrabschnittes im Bereich des Absperrgliedes angeordnet. Hieraus wird deutlich, dass die Einrichtung zur Zerstörung des Absperrgliedes auf die Stirnseite des insbesondere scheibenförmigen Absperrgliedes einwirkt. Als besonders vorteilhaft hat sich herausgestellt, wenn die Einrichtung zur Zerstörung des Absperrgliedes als Schlagbolzen ausgebildet ist. Der Schlagbolzen, der federbelastet ist, und in einem Dom auf dem Umfang des Rohrabschnittes in Richtung auf die Stirnseite des insbesondere scheibenförmigen Absperrgliedes beweglich gelagert ist, wird vorteilhaft durch ein Seil, eine Kette oder Ähnliches gegen die Last der mindestens einen Feder vorgespannt gehalten, und trifft nach Auslösen aufgrund der Federkraft auf die Stirnseite z. B. der Scheibe, die dann zerspringt. Es wurde bereits einleitend darauf hingewiesen, dass im Fall der Kernschmelze auch bei der bekannten Rohrabsperreinrichtung ein Seil aufschmilzt, wobei nach Schmelzen des Seiles aufgrund des hierdurch aktivierten Gewichtes eine Klappe aufschwenkt. Auch im vorliegenden Fall wird nach Aufschmelzen des Seiles bzw. einer Kette der Schlagbolzen aktiviert, der wie bereits ausgeführt, unter der Last mindestens einer Feder steht.

Gegenstand der Erfindung ist ebenfalls eine Vorrichtung zur Notversorgung der in einem Reaktorbehälter eines Kernkraftwerkes angeordneten Brennstäbe mit Kühlflüssigkeit bei einsetzender Kernschmelze, umfassend einen Behälter zur Aufnahme der Kühlflüssigkeit, der mit dem Reaktorbehälter durch mindestens eine Rohrleitung verbunden ist, wobei die Rohrabsperreinrichtung nach mindestens einem der Ansprüche 1 bis 12 ausgebildet ist. Hierbei ist das Seil oder die Kette im Bereich des Reaktorbehälters derart geführt, dass bei einsetzender Kernschmelze, wie dies bereits erläutert worden ist, durch die hierbei entstehende Temperatur das Seil aufgeschmolzen wird.

Anhand der Zeichnungen wird die Erfindung nachstehend beispielhaft näher erläutert.
- Fig. 1: zeigt schematisch den Behälter zur Aufnahme der Kühlflüssigkeit sowie den Reaktorbehälter, wobei beide durch eine Rohrleitung verbunden sind;
- Fig. 2: zeigt die Rohrabsperreinrichtung im Schnitt;

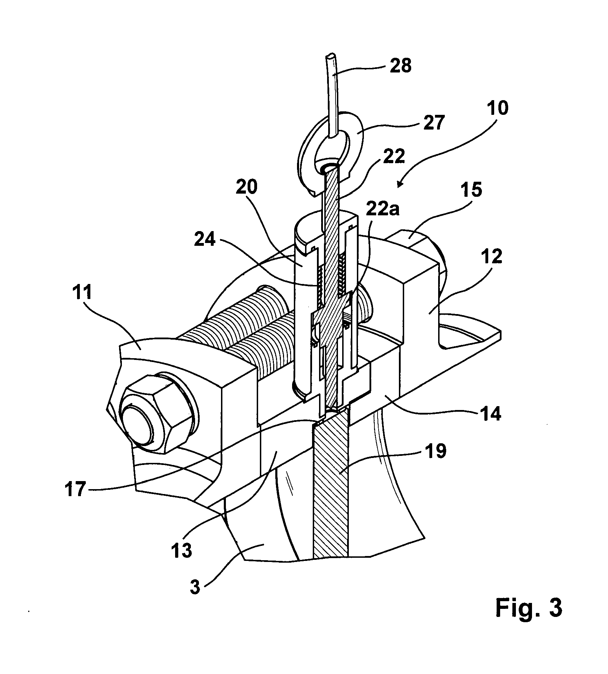

- Fig. 3: zeigt den Ausschnitt X aus Fig. 2 in vergrößerter und perspektivischer Darstellung.

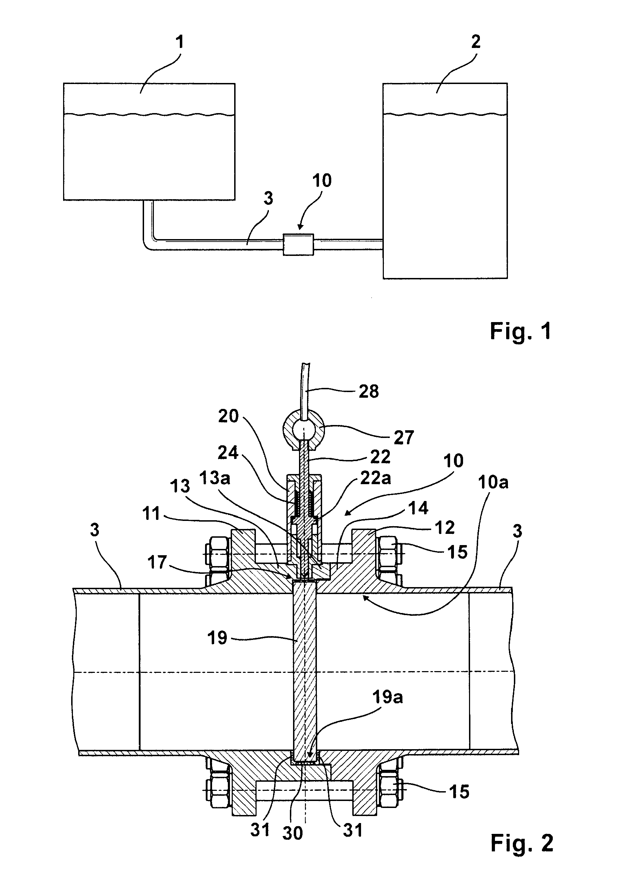

Gemäß Fig. 1 ist der Kühlmittelbehälter mit 1 bezeichnet, der Reaktorbehälter mit 2, sowie die Rohrleitung, die den Kühlmittelbehälter mit dem Reaktorbehälter verbindet, mit 3. In der Rohrleitung 3 befindet sich die mit 10 bezeichnete Rohrabsperreinrichtung, die Gegenstand der Erfindung ist.

Die mit 10 bezeichnete Rohrabsperreinrichtung mit dem Rohrabschnitt 10a besitzt zwei Flansche 11 und 12, die durch umlaufend angeordnete Schraubverbindungen 15 miteinander verbunden werden können. Jeder Flansch 11, 12 zeigt einen ringförmigen, dem gegenüberliegenden Ansatz zugerichteten Ansatz 13, 14, wobei bei Verbindung der beiden Flansche 11, 12 durch die besagten Schraubverbindungen 15 auf der Innenseite der Rohrabsperreinrichtung eine umlaufende Nut 17 gebildet wird. Im Bereich der Nut überlappen die ringförmigen Ansätze 13, 14 einander. Die umlaufende Nut 17 dient der Aufnahme des scheibenförmig ausgebildeten Absperrgliedes 19. Das scheibenförmige Absperrglied 19 besteht vorzugsweise aus einem Spezialglas, das druck- und temperaturbeständig ist. Der eine ringförmige Ansatz 13 zeigt auf dem Umfang einen Dom 20, wobei der Dom 20 den mit 22 bezeichneten Schlagbolzen aufnimmt. Der Schlagbolzen 22 steht in dem Dom 20 unter der Last einer Feder 24, die sich einerseits an einem Bund 22a des Schlagbolzens abstützt, und andererseits an dem Dom. Der Schlagbolzen 22 weist am oberen Ende eine Öse 27 zur Aufnahme eines Seiles 28 auf. Im Bereich des Schlagbolzens 22 und entsprechend auch des Doms 20 zeigt der Rohrabschnitt 10a eine Öffnung 13a um den Durchschlag des Schlagbolzens auf die Stirnseite 19a der Scheibe 19 zu ermöglichen. Durch das Seil wird der Schlagbolzen 22 gegen die Feder 24 vorgespannt. Schmilzt das Seil 28 bei einer Kernschmelze, wird der Schlagbolzen 22 mit seinem spitzen Ende aufgrund der Kraft der Feder 24 gegen die Stirnseite der als Absperrglied fungierenden Scheibe geschlagen, wodurch diese in viele Einzelteile zerspringt.

Wie bereits ausgeführt wird die Scheibe 19 durch die Nut 17 aufgenommen. Zur Abdichtung der Scheibe 19 in der Nut 17 ist eine im Bereich der Stirnseite 19a der Scheibe 19 umlaufende Dichtung 30 angeordnet, wobei darüber hinaus zu beiden Seiten der Scheibe 19, also in Dichtungen 31 vorgesehen sein können. Diese Dichtungen sind, da sie statisch sind, auf Graphitbasis hergestellt. Zusätzlich kann das Absperrglied also zum Beispiel die Scheibe in der Nut eingeklebt sein. Als Kleber sind verschiedene im Kernkraftwerkbau zugelassene Klebstoffe einsetzbar, zum Beispiel Loctite^{®} 5772 oder Loctite^{®} 2432

In Bezug auf die stirnseitig umlaufende Dichtung 30 ist vorgesehen, dass diese im Bereich des Schlagbolzens 22 eine Aussparung (nicht dargestellt) aufweist, sodass der Schlagbolzen unmittelbar auf die Stirnseite z. B. der Glasscheibe auftrifft.

### Bezugszeichenliste:

- 1: Kühlmittelbehälter
- 2: Reaktorbehälter
- 3: Rohrleitung
- 10: Rohrabsperreinrichtung
- 10a: Rohrabschnitt
- 11: Flansch
- 12: Flansch
- 13: ringförmiger Ansatz
- 13a: Öffnung im Rohrabschnitt
- 14: ringförmiger Ansatz
- 15: Schraubverbindung
- 17: umlaufende Nut
- 19: Absperrglied (Scheibe)
- 19a: Stirnseite
- 20: Dom
- 22: Schlagbolzen
- 22a: Bund am Schlagbolzen
- 24: Feder
- 27: Öse
- 28: Seil
- 30: umlaufende Dichtung (tangential)
- 31: umlaufende Dichtung (in Achsrichtung der Rohrleitung an dem Absperrglied)

## Patentansprüche

1. Rohrabsperreinrichtung (10) umfassend einen in einer Rohrleitung (3) angeordneten Rohrabschnitt (10a) mit einem Absperrglied (19),
**dadurch gekennzeichnet,**
**dass** das Absperrglied (19) in Schließstellung durch eine im Bereich des Rohrabschnitts (10a) angeordnete Einrichtung (22) zerstörbar ist, wobei die Einrichtung zur Zerstörung des Absperrgliedes (19) von außen betätigbar ist.

2. Rohrabsperreinrichtung (10) nach Anspruch 1,
**dadurch gekennzeichnet,**
**dass** das Absperrglied (19) nach Art einer Scheibe ausgebildet ist.

3. Rohrabsperreinrichtung (10) nach Anspruch 2,
**dadurch gekennzeichnet,**
**dass** die Scheibe in dem Rohrabschnitt (10a) umlaufend eingelassen ist.

4. Rohrabsperreinrichtung (10) nach Anspruch 2 oder 3,
**dadurch gekennzeichnet,**
**dass** die Scheibe durch eine umlaufende, stirnseitig angeordnete Dichtung (30) gegenüber dem Rohrabschnitt (10a) abgedichtet ist.

5. Rohrabsperreinrichtung (10) nach Anspruch 2 bis 4,
**dadurch gekennzeichnet,**
**dass** die Scheibe in Achsrichtung des Rohrabschnittes (10a) zumindest auf einer Seite eine umlaufende Dichtung (31) aufweist.

6. Rohrabsperreinrichtung (10) nach einem der voranstehenden Ansprüche,
**dadurch gekennzeichnet,**
**dass** das Absperrglied (19) aus einem spröden Material hergestellt ist.

7. Rohrabsperreinrichtung (10) nach einem der voranstehenden Ansprüche,
**dadurch gekennzeichnet,**
**dass** das Absperrglied (19) aus einem Glas, einem glasartigen oder keramischen Werkstoff hergestellt ist.

8. Rohrabsperreinrichtung (10) nach einem der voranstehenden Ansprüche,
**dadurch gekennzeichnet,**
**dass** die Einrichtung zur Zerstörung des Absperrgliedes (19) auf dem Umfang des Rohrabschnittes (10a) im Bereich des Absperrgliedes (19) angeordnet ist.

9. Rohrabsperreinrichtung (10) nach Anspruch 8,
**dadurch gekennzeichnet,**
**dass** die Einrichtung zur Zerstörung des Absperrglieds (19) einen Schlagbolzen (22) aufweist.

10. Rohrabsperreinrichtung (10) nach Anspruch 9,
**dadurch gekennzeichnet,**
**dass** der Schlagbolzen (22) federbelastet ist.

11. Rohrabsperreinrichtung (10) nach Anspruch 9 oder 10,
**dadurch gekennzeichnet,**
**dass** der Schlagbolzen (22) durch ein Seil (28), eine Kette oder Ähnliches gegen die Last mindestens einer Feder (24) vorgespannt gehalten ist.

12. Rohrabsperreinrichtung (10) nach einem der Ansprüche 9 bis 11, **dadurch gekennzeichnet,**
**dass** der Schlagbolzen (22) in einem Dom (20) auf dem Umfang des Rohrabschnittes (10a) der Rohrabsperreinrichtung (10) beweglich gelagert ist.

13. Vorrichtung zur Notversorgung der in einem Reaktorbehälter eines Kernkraftwerks angeordneten Brennstäbe mit Kühlflüssigkeit bei einer einsetzenden Kernschmelze, umfassend einen Behälter (1) zur Aufnahme der Kühlflüssigkeit, der mit dem Reaktorbehälter (2) durch mindestens eine Rohrleitung (3) verbunden ist, **gekennzeichnet durch,**
eine Rohrabsperreinrichtung (10) nach mindestens einem der Ansprüche 1 bis 12.

14. Vorrichtung nach Anspruch 13,
**dadurch gekennzeichnet,**
**dass** das Seil oder die Kette (28) im Bereich des Reaktorbehälters (2) derart geführt ist, dass das Seil oder die Kette (28) bei einsetzender Kernschmelze durch die hierbei entstehende Temperatur aufgeschmolzen wird.

## Geänderte Patentansprüche

### Geänderte Patentansprüche gemäss Regel 137(2) EPÜ.

**1.** Rohrabsperreinrichtung (10) umfassend einen in einer Rohrleitung (3) angeordneten Rohrabschnitt (10a) mit einem als Scheibe (19) ausgebildetem Absperrglied ,
wobei die Scheibe (19) in Schließstellung durch eine im Bereich des Rohrabschnitts (10a) angeordnete Einrichtung (22) zerstörbar ist, wobei die Einrichtung zur Zerstörung der Scheibe von außen betätigbar ist,
**dadurch gekennzeichnet,**
**dass** die Scheibe (19) aus einem spröden Material hergestellt ist, wobei die Einrichtung zur Zerstörung der Scheibe (19) auf dem Umfang des Rohrabschnittes (10a) im Bereich der Scheibe (19) angeordnet ist.

**2.** Rohrabsperreinrichtung (10) nach Anspruch 1,
**dadurch gekennzeichnet,**
**dass** die Scheibe in dem Rohrabschnitt (10a) umlaufend eingelassen ist.

**3.** Rohrabsperreinrichtung (10) nach Anspruch 1 oder 2,
**dadurch gekennzeichnet,**
**dass** die Scheibe durch eine umlaufende, stirnseitig angeordnete Dichtung (30) gegenüber dem Rohrabschnitt (10a) abgedichtet ist.

**4.** Rohrabsperreinrichtung (10) nach einem der voranstehenden Ansprüche,
**dadurch gekennzeichnet,**
**dass** die Scheibe in Achsrichtung des Rohrabschnittes (10a) zumindest auf einer Seite eine umlaufende Dichtung (31) aufweist.

**5.** Rohrabsperreinrichtung (10) nach einem der voranstehenden Ansprüche,
**dadurch gekennzeichnet,**
**dass** die Scheibe (19) aus einem Glas, einem glasartigen oder keramischen Werkstoff hergestellt ist.

**6.** Rohrabsperreinrichtung (10) nach einem der voranstehenden Ansprüche,
**dadurch gekennzeichnet,**
**dass** die Einrichtung zur Zerstörung der Scheibe (19) einen Schlagbolzen (22) aufweist.

**7.** Rohrabsperreinrichtung (10) nach Anspruch 6,
**dadurch gekennzeichnet,**
**dass** der Schlagbolzen (22) federbelastet ist.

**8.** Rohrabsperreinrichtung (10) nach Anspruch 7,
**dadurch gekennzeichnet,**
**dass** der Schlagbolzen (22) durch ein Seil (28), eine Kette oder Ähnliches gegen die Last mindestens einer Feder (24) vorgespannt gehalten ist.

**9.** Rohrabsperreinrichtung (10) nach einem der Ansprüche 6 bis 8,
**dadurch gekennzeichnet,**
**dass** der Schlagbolzen (22) in einem Dom (20) auf dem Umfang des Rohrabschnittes (10a) der Rohrabsperreinrichtung (10) beweglich gelagert ist.

**10.** Vorrichtung zur Notversorgung der in einem Reaktorbehälter eines Kernkraftwerks angeordneten Brennstäbe mit Kühlflüssigkeit bei einer einsetzenden Kernschmelze, umfassend einen Behälter (1) zur Aufnahme der Kühlflüssigkeit, der mit dem Reaktorbehälter (2) durch mindestens eine Rohrleitung (3) verbunden ist,
**gekennzeichnet durch,**
eine Rohrabsperreinrichtung (10) nach mindestens einem der Ansprüche 1 bis 9.

**11.** Vorrichtung nach Anspruch 10,
**dadurch gekennzeichnet,**
**dass** das Seil oder die Kette (28) im Bereich des Reaktorbehälters (2) derart geführt ist, dass das Seil oder die Kette (28) bei einsetzender Kernschmelze durch die hierbei entstehende Temperatur aufgeschmolzen wird.
